# EUROPEAN PATENT APPLICATION

(11) **EP 4 512 869 A1**
(43) Date of publication of application: **26.02.2025**
(21) Application number: 24195553.3
(22) Date of filing: 21.08.2024
(51) Int. Cl.: C09J 133/10

(54) **AQUEOUS ADHESIVE COMPOSITION**

(30) Priority: 23.08.2023 JP 2023135493
(71) Applicant: Seiko Epson Corporation, Tokyo 160-8801 (JP)
(72) Inventor: KOMATSU, Harunobu, Suwa-shi, 392-8502 (JP); TSUKIJI, Nikako, Suwa-shi, 392-8502 (JP); YAMAZAKI, Soichi, Suwa-shi, 392-8502 (JP)
(74) Representative: Lewis Silkin LLP

(57) **Abstract**

An aqueous adhesive composition to form an adhesive layer on a surface of a cloth transport member of an ink jet printing apparatus includes a (meth)acrylic-based resin and water, and the adhesive layer has a storage modulus at 23°C of 1.5×10⁵ to 5.0×10⁵ Pa.

## Description

The present application is based on, and claims priority from JP Application Serial Number 2023-135493, filed August 23, 2023, the disclosure of which is hereby incorporated by reference herein in its entirety.

### BACKGROUND

### 1. Technical Field

The present disclosure relates to an aqueous adhesive composition.

### 2. Related Art

Since being able to record a highly fine image using a relatively simple apparatus, an ink jet recording method has been rapidly developed in various types of fields. Among the developments, various types of studies on an ejection stability and the like have been carried out. For example, as a printing technique using an ink jet method, in order to stabilize a contact state between a removing member and a transport member and in order to improve recovery performance of washing water by the removing member, JP-A-2020-109036 has disclosed a transport device including a displacement suppression member with respect to the transport member and an image recording apparatus.

As disclosed in JP-A-2020-109036, in the printing technique using an ink jet method, a cloth is adhered to a transport member, such as an endless belt, and is then transported to a printing portion. An adhesive is applied on a surface of the transport member, and hence, the surface of the transport member has an adhesiveness. The adhesive is also called a "temporary fixing adhesive (jibari agent)".

The cloth to be used as a recording medium is peeled away from the transport member after printing is performed and is then transported to the following step. On the other hand, since a new cloth is again to be adhered to the transport member from which the cloth is already peeled away, inks, lint, and other remaining materials adhered to the transport member in a printing step are required to be removed. In general, the remaining materials and the like adhered to the transport member are washed out with water. In the case described above, in order to wash the transport member, a brush, a sponge, or the like may be used in some cases.

As the adhesive used for the ink jet printing as described above, in order to withstand against water washing, in general, an adhesive prepared by dissolving a hydrophobic resin in an organic solvent has been used. Incidentally, in recent years, in order to reduce environmental loads and to improve working conditions, an aqueous adhesive in which usage of organic solvents is decreased has been required. However, since the aqueous adhesive is inferior in terms of durability, the adhesiveness of the adhesive provided on the surface of the transport member tends to be gradually decreased by repeated washings, and hence, after every predetermined number of washings, a new adhesive is also required to be applied to the surface described above.

### SUMMARY

According to an aspect of the present disclosure, there is provided an aqueous adhesive composition to form an adhesive layer on a surface of a cloth transport member of an ink jet printing apparatus, the aqueous adhesive composition comprising a (meth)acrylic-based resin and water, the adhesive layer having a storage modulus at 23°C of 1.5×10⁵ to 50×10⁵ Pa.

According to another aspect of the present disclosure, there is provided an adhesiveness imparting method comprising a step of adhering the aqueous adhesive composition described above to a surface of a cloth transport member of an ink jet printing apparatus to form an adhesive layer.

According to another aspect of the present disclosure, there is provided an ink jet printing apparatus comprising a transport mechanism in which a cloth is adhered to an adhesive layer and is transported, the adhesive layer being formed of the aqueous adhesive composition described above and being provided on a surface of a cloth transport member; a recording portion to perform printing recording using an inkjet head on the cloth adhered to the adhesive layer; and a washing portion to wash the adhesive layer from which the cloth is peeled away after the printing recording is performed.

According to another aspect of the present disclosure, there is provided an ink jet printing method comprising a transport step in which a cloth is adhered to an adhesive layer and is transported, the adhesive layer being formed from the aqueous adhesive composition described above and being provided on a surface of a cloth transport member of an ink jet printing apparatus; a recording step of performing printing recording using an inkjet head on the cloth adhered to the adhesive layer; and after the printing recording is performed, a washing step of washing the adhesive layer from which the cloth is peeled away.

### BRIEF DESCRIPTION OF THE DRAWINGS

FIG. 1 is a schematic cross-sectional view of an inkjet printing apparatus.
FIG. 2 is Table 1 showing compositions of (meth)acrylic-based resins A to J.
FIG. 3 is Table 2 showing compositions of aqueous adhesive compositions.

### DESCRIPTION OF EMBODIMENTS

Hereinafter, if needed, with reference to the drawings, although embodiments (hereinafter, each referred to as "this embodiment") of the present disclosure will be described in detail, the present disclosure is not limited thereto and may be variously changed and/or modified without departing from the scope of the present disclosure. In the drawings, the same elements are designated by the same reference numerals, and duplicated description will be omitted. In addition, unless otherwise particularly noted, the top to bottom and the left to right positional relationships are based on the positional relationships shown in the drawing. Furthermore, the dimensional ratio shown in the drawing is not limited to that shown therein.

### 1. AQUEOUS ADHESIVE COMPOSITION

An aqueous adhesive composition of this embodiment (hereinafter, also simply referred to as "aqueous adhesive composition") is a composition to form an adhesive layer on a surface of a cloth transport member of an ink jet printing apparatus, the aqueous adhesive composition includes a (meth)acrylic-based resin and water, and the adhesive layer has a storage modulus at 23°C of 1.5×10⁵ to 5.0×10⁵ Pa.

In a related ink jet printing apparatus, an adhesive layer is formed on a transport member, such as an endless belt, and a cloth functioning as a recording medium is adhered to the adhesive layer. Subsequently, after the cloth is transported to a printing portion, and recording is then performed on the cloth, the transport member and the cloth are peeled away from each other.

As the adhesive used for the cloth transport member as described above, in the past, a solvent-based acrylic adhesive has been frequently used. However, when the solvent-based acrylic adhesive is applied, an organic solvent contained therein is evaporated, and hence adverse influences on human bodies in working conditions have been concerned. In addition, when the solvent-based acrylic adhesive is used, an exhaust device is required to be installed in use environment of the ink jet printing apparatus, and as a result, the total apparatus configuration is enlarged, and the cost thereof is also increased.

In addition, when the adhesive layer is formed on the cloth transport member of the ink jet printing apparatus by application of the adhesive, and when the cloth is transported while being adhered to the adhesive layer, another problem may arise. That is, while having an appropriate adhesion to be adhered to the cloth and to be peeled away therefrom, the adhesive layer is required to have a durability and a mechanical strength against water washing and/or brushing which is performed to remove lint and inks adhered thereto. However, an adhesive layer formed from an aqueous adhesive tends to have an inferior durability. Hence, it has been difficult to enable an adhesive layer formed from an aqueous adhesive to have not only an excellent durability but also excellent adhesion and mechanical strength.

In order to overcome the problem described above, in the aqueous adhesive composition of this embodiment, water and a (meth)acrylic-based resin which contributes to adhesion and suppression in decrease thereof by brushing are included. Accordingly, the adhesive layer formed from the aqueous adhesive composition of this embodiment has a storage modulus at 23°C of 1.5×10⁵ to 50×10⁵ Pa, and hence, the adhesive layer is able to satisfy the adhesion and the durability at the same time. Accordingly, in the printing, the adhesive layer described above is able to function as an adhesive layer to adhere the cloth to the cloth transport member, and in the following washing step, even when water washing is performed using a physical device, such as a brush or a sponge, damage on the adhesive layer can be suppressed. Hereinafter, the components to be included in the aqueous adhesive composition will be described in detail.

### 1.1. (METH)ACRYLIC-BASED RESIN

Since the (meth)acrylic-based resin is included, the adhesion and the durability of the adhesive layer formed on the cloth transport member is further improved. The (meth)acrylic-based resin may be either a water-soluble resin or a resin emulsion in which a resin is dispersed in an aqueous medium. In this embodiment, those resins may also be collectively called the (meth)acrylic-based resin. Since the (meth)acrylic-based resin is used, the environmental loads caused by organic solvents can be reduced, and in addition, a peelability of the cloth from the adhesive layer also tends to be further improved.

As the (meth)acrylic-based resin, any resin may be used as long as being a polymer obtained by polymerization using a (meth)acrylic-based monomer, such as (meth)acrylic acid or a (meth)acrylate ester, as one component, and for example, a homopolymer obtained from a (meth)acrylic-based monomer or a copolymer between a (meth)acrylic-based monomer and another monomer may be mentioned. Although a more particular (meth)acrylic-based monomer is not particularly limited, for example, there may be mentioned a (meth)acrylic-based monomer having an aliphatic group with 3 carbon atoms or less, such as methyl methacrylate (MMA), ethyl methacrylate (EMA), or n-propyl methacrylate (PMA); a (meth)acrylic-based monomer having an aliphatic group with 4 carbon atoms or more, such as butyl methacrylate (BMA), butyl acrylate (BA), or 2-ethylhexyl acrylate (2EHA); or a monomer having an aromatic group such as styrene (St). Although the another monomer is not particularly limited, for example, acrylamide or acrylonitrile may be mentioned.

The monomer included in the (meth)acrylic-based resin is not particularly limited, and for example, there may be mentioned methyl methacrylate (MMA), ethyl methacrylate (EMA), n-propyl methacrylate (PMA), butyl methacrylate (BMA), styrene (St), butyl acrylate (BA), or 2-ethylhexyl acrylate (2EHA).

Although the combination between the monomers is not particularly limited, for example, a combination at least containing ethyl methacrylate, butyl acrylate, and 2-ethylhexyl acrylate, a combination at least containing methyl methacrylate, butyl acrylate, and 2-ethylhexyl acrylate, a combination at least containing n-propyl methacrylate, butyl acrylate, and 2-ethylhexyl acrylate, or a combination at least containing butyl methacrylate, butyl acrylate, and 2-ethylhexyl acrylate may be mentioned.

The aqueous adhesive composition includes, as the (meth)acrylic-based resin, at least a first (meth)acrylic-based resin and a second (meth)acrylic-based resin, and a glass transition temperature Tg1 of the first (meth)acrylic-based resin is preferably higher than a glass transition temperature Tg2 of the second (meth)acrylic-based resin. Since the two types of (meth)acrylic-based resins having the different glass transition temperatures Tgs as described above are included, the adhesion and the durability are improved, and the effect to suppress the decrease in adhesion by brushing tends to be further improved.

The glass transition temperature Tg1 of the first (meth)acrylic-based resin may be preferably -25°C to 25°C, more preferably -20°C to 20°C, further preferably -15°C to 15°C, and particularly preferably -15°C to 5°C. Since the glass transition temperature Tg1 is in the range described above, the adhesion tends to be further improved.

The glass transition temperature Tg2 of the second (meth)acrylic-based resin may be preferably -70°C to -15°C, more preferably -65°C to -20°C, further preferably -60°C to -25°C, and particularly preferably -55°C to -30°C. Since the glass transition temperature Tg2 is in the range described above, the decrease in adhesion by brushing tends to be further suppressed.

The difference |Tg1-Tg2| between the glass transition temperature Tg1 and the glass transition temperature Tg2 may be preferably 10°C to 50°C, more preferably 15°C to 45°C, further preferably 20°C to 40°C, and particularly preferably 25°C to 35°C. Since the difference |Tg1-Tg2| is in the range described above, the adhesion and the effect to suppress the decrease in adhesion by brushing tend to be further improved.

In addition, the glass transition temperature can be adjusted by the glass transition temperature of a homopolymer obtained from a polymerizable compound to be used and the content mass ratio thereof. In addition, the glass transition temperature can be measured by a related known method.

Although the monomers included in the first (meth)acrylic-based resin are not particularly limited, monomers including at least ethyl methacrylate, butyl methacrylate, butyl acrylate, and 2-ethylhexyl acrylate, monomers including at least ethyl methacrylate, styrene, butyl acrylate, and 2-ethylhexyl acrylate, monomers including at least methyl methacrylate, butyl acrylate, and 2-ethylhexyl acrylate, or monomers including at least butyl methacrylate, butyl acrylate, and 2-ethylhexyl acrylate may be preferably mentioned. Since the first (meth)acrylic-based resin including the above monomers is used, the adhesion and the effect to suppress the decrease in adhesion by brushing tend to be further improved.

The first (meth)acrylic-based resin preferably includes a (meth)acrylic monomer, the homopolymer of which has a glass transition temperature of 40°C or more, as one of constituent units. Since the first (meth)acrylic-based resin includes the above monomer, the adhesion of the adhesive layer and the effect to suppress the decrease in adhesion by brushing tend to be further improved.

A content of the (meth)acrylic monomer, the homopolymer of which has a glass transition temperature Tg of 40°C or more, with respect to a total mass of the first (meth)acrylic-based resin is preferably 20 to 70 percent by mass, more preferably 25 to 65 percent by mass, even more preferably 30 to 60 percent by mass, and further preferably 35 to 55 percent by mass. Since the content of the (meth)acrylic monomer, the homopolymer of which has a glass transition temperature Tg of 40°C or more, is in the range described above, the adhesion of the adhesive layer and the effect to suppress the decrease in adhesion by brushing tend to be further improved.

Although the monomers included in the second (meth)acrylic-based resin are not particularly limited, for example, monomers at least containing ethyl methacrylate, butyl methacrylate, butyl acrylate, and 2-ethylhexyl acrylate, or monomers at least containing n-propyl methacrylate, butyl methacrylate, butyl acrylate, and 2-ethylhexyl acrylate may be preferably mentioned. Since the second (meth)acrylic-based resin including the above monomers is used, the adhesion and the effect to suppress the decrease in adhesion by brushing tend to be further improved.

A content of the first (meth)acrylic-based resin with respect to a total amount of the first (meth)acrylic-based resin and the second (meth)acrylic-based resin is preferably 50 percent by mass or more, more preferably 50 to 85 percent by mass, even more preferably 53 to 82 percent by mass, further preferably 55 to 80 percent by mass, and particularly preferably 60 to 70 percent by mass. Since the content of the first (meth)acrylic-based resin is in the range described above, the adhesion of the adhesive layer and the effect to suppress the decrease in adhesion by brushing tend to be further improved.

A content of the second (meth)acrylic-based resin with respect to the total amount of the first (meth)acrylic-based resin and the second (meth)acrylic-based resin is preferably less than 50 percent by mass, more preferably 10 to 48 percent by mass, even preferably 15 to 47 percent by mass, and further preferably 30 to 45 percent by mass. Since the content of the second (meth)acrylic-based resin is in the range described above, the adhesion of the adhesive layer and the effect to suppress the decrease in adhesion by brushing tend to be further improved.

A content of the (meth)acrylic-based resin with respect to a total mass of the aqueous adhesive composition is preferably 20 to 70 percent by mass, more preferably 30 to 60 percent by mass, even more preferably 35 to 55 percent by mass, and further preferably 40 to 50 percent by mass. Since the content of the (meth)acrylic-based resin is 20 percent by mass or more, the adhesion and the durability of an adhesive layer to be obtained tend to be further improved. In addition, since the content of the (meth)acrylic-based resin is 70 percent by mass or less, coatability and storage stability of the aqueous adhesive composition tend to be further improved. In addition, the content with respect to the total mass of the aqueous adhesive composition indicates the amount of the solid content.

A content of the first (meth)acrylic-based resin with respect to the total mass of the aqueous adhesive composition is preferably 10 to 70 percent by mass, more preferably 20 to 60 percent by mass, and further preferably 25 to 50 percent by mass. Since the content of the first (meth)acrylic-based resin is in the range described above, the adhesion of the adhesive layer and the effect to suppress the decrease in adhesion by brushing tend to be further improved.

A content of the second (meth)acrylic-based resin with respect to the total mass of the aqueous adhesive composition is preferably 50 percent by mass or less, 1 to 40 percent by mass, more preferably 3 to 35 percent by mass, further preferably 5 to 30 percent by mass, and particularly preferably 7 to 25 percent by mass. Since the content of the second (meth)acrylic-based resin is in the range described above, the adhesion of the adhesive layer and the effect to suppress the decrease in adhesion by brushing tend to be further improved.

In addition, the aqueous adhesive composition may also include a resin other than the (meth)acrylic-based resin. Although the other resin as described above is not particularly limited, for example, an urethane resin may be mentioned.

### 1.2. ADHESIVENESS IMPARTING AGENT

The aqueous adhesive composition preferably includes no adhesiveness imparting agent or contains a small amount thereof. When the aqueous adhesive composition includes no adhesiveness imparting agent or contains a small amount thereof, the adhesion of the adhesive layer and the effect to suppress the decrease in adhesion by brushing tend to be easily maintained. As the adhesiveness imparting agent as described above, for example, a rosin-based compound, a terpene-based compound, or a hydrocarbon resin may be typically mentioned. In more particular, for example, there may be mentioned a rosin-based compound, such as a natural rosin, a modified rosin, a glycerol ester of a natural rosin, a glycerol ester of a modified rosin, a pentaerythritol ester of a natural rosin, or a pentaerythritol ester of a modified rosin; a terpene-based compound, such as a copolymer of natural terpenes, a three-dimensional polymer of natural terpenes, an aromatic modified terpene resin, a hydrogenated derivative of an aromatic modified terpene resin, a terpene phenol resin, or a terpene resin (a monoterpene, a diterpene, a triterpene, a polyterpene, or the like); or a hydrocarbon resin, such as an aliphatic petroleum hydrocarbon resin (C5-based resin), a hydrogenated derivative of an aliphatic petroleum hydrocarbon resin, an aromatic petroleum hydrocarbon resin (C9-based resin), such as a styrene oligomer, or a hydrogenated derivative of an aromatic petroleum hydrocarbon resin.

Although the adhesiveness imparting agent is preferably not included, when the adhesiveness imparting agent is included, a content thereof with respect to the total mass of the aqueous adhesive composition is preferably 5 percent by mass or less, more preferably 4 percent by mass or less, even more preferably 3 percent by mass or less, further preferably 2 percent by mass or less, and particularly preferably 1 percent by mass or less. Since the content of the adhesiveness imparting agent is in the range described above, the adhesion of an adhesive layer to be obtained and the effect to suppress the decrease in adhesion by brushing tend to be easily maintained. From the point similar to that described above, a total content of the compounds selected from the group consisting of the rosin-based compound, the terpene-based compound, and the hydrocarbon resin is preferably set in the range similar to that described above.

### 1.3. WATER

A content of the water with respect to the total mass of the aqueous adhesive composition is preferably 30 to 80 percent by mass, more preferably 35 to 70 percent by mass, and further preferably 40 to 60 percent by mass.

### 1.4. SURFACTANT

The aqueous adhesive composition may also include a surfactant. The surfactant is not particularly limited, and for example, an anionic surfactant, a nonionic surfactant, or a cationic surfactant may be mentioned.

As the anionic surfactant, for example, there may be mentioned an alkyl sulfocarboxylate salt, an alkyldiphenyl ether disulfonate salt, an α-olefin sulfonate salt, a polyoxyethylene alkyl ether acetate salt, an N-acylamino acid or its salt, an N-acylmethyltaurine salt, an alkyl sulfate salt, such as ammonium lauryl sulfate or sodium lauryl sulfate, an alkyl sulfate polyoxyalkyl ether sulfate salt, an alkyl sulfate polyoxyethylene alkyl ether phosphate salt, a rosin acid soap, a castor oil sulfate ester salt, a lauryl alcohol sulfate ester salt, an alkyl phenol phosphate ester, an alkyl phosphate ester, an alkyl aryl sulfonate salt, a diethyl sulfosuccinate salt, a diethyl hexyl sulfosuccinate salt, or a dioctyl sulfosuccinate salt.

As the nonionic surfactant, for example, there may be mentioned an acetylene glycol surfactant, a silicone surfactant, a polyoxyethylene alkyl ether, a polyoxyethylene alkylphenyl ether, a polyoxyethylene fatty acid ester, a polyoxyethylene hydrogenated castor oil, a propylene glycol fatty acid ester, a glycerin fatty acid ester, a polyglycerin fatty acid ester, a sorbitan fatty acid ester, a sucrose fatty acid ester, an alkyl polyglycoside, an alkyl diethanolamide, or an alkylamine oxide. A commercial product of the nonionic surfactant is not particularly limited, and for example, there may be mentioned Emulgen 123P, 430, or 1108 (trade name, manufactured by Kao Corporation), Newcol 1006, 1008, or 1020 (trade name, manufactured by Nippon Nyukazai Co., Ltd.), or Noigen DL-0415, ET-116B, ET-106A, DH-0300, YX-400, or EA-160 (trade name, manufactured by DKS Co., Ltd.).

As the cationic surfactant, for example, there may be mentioned an alkylamine salt, a fatty acid amidoamine salt, a monoalkyl quaternary ammonium salt, a dialkyl quaternary ammonium salt, a trialkyl quaternary ammonium salt, a benzalkonium quaternary ammonium salt, benzethonium chloride, or an alkylpyridinium salt.

In this embodiment, among those mentioned above, the nonionic surfactant is more preferable, and in more particular, an alkyl ether-based nonionic surfactant is preferable. Since the surfactant as described above is used, the durability tends to be maintained.

A content of the surfactant with respect to the total mass of the aqueous adhesive composition is preferably 1 to 7 percent by mass, more preferably 2 to 6 percent by mass, and further preferably 3 to 5 percent by mass.

### 1.5. ORGANIC SOLVENT

In order to reduce the influences on the environmental loads and human bodies, the aqueous adhesive composition of this embodiment preferably includes no organic solvents. In addition, when an organic solvent is included, the content thereof with respect to the total mass of the aqueous adhesive composition is preferably 5.0 percent by mass or less, more preferably 2.5 percent by mass or less, and further preferably 1.0 percent by mass or less. Accordingly, since the environmental loads can be reduced, and VOC (volatile organic compounds) generated when the aqueous adhesive composition is used can also be reduced, the working conditions tend to be further improved.

### 1.6. COLORANT

The aqueous adhesive composition of this embodiment preferably includes no colorants. In addition, when a colorant is included, the content thereof with respect to the total mass of the aqueous adhesive composition is preferably 1.0 percent by mass or less, more preferably 0.5 percent by mass or less, and further preferably 0.3 percent by mass or less. Accordingly, the aqueous adhesive composition of this embodiment can be clearly discriminated from a composition, such as an ink composition, a print paste, or a paint, which is used for coloration.

### 1.7. STORAGE MODULUS

The aqueous adhesive composition of this embodiment is a composition to form the adhesive layer on the surface of the cloth transport member of the ink jet printing apparatus. The adhesive layer obtained by this embodiment is excellent in adhesion and durability and also has excellent mechanical characteristics as described below.

The adhesive layer of this embodiment has a storage modulus at 23°C of 1.5×10⁵ to 50×10⁵ Pa, preferably 1.6×10⁵ to 4.8×10⁵ Pa, and more preferably 2.0×10⁵ to 4.5×10⁵ Pa. Since the storage modulus described above is 1.5×10⁵ Pa or more, the adhesion can be suppressed from being decreased by water washing of the adhesive layer. In addition, since the storage modulus described above is 5.0×10⁵ Pa or less, the initial adhesion can be increased.

A method to form an adhesive layer which is used for measurement of the storage modulus is not particularly limited, and for example, the adhesive layer is obtained in a manner such that the aqueous adhesive composition is applied to a slide glass having width of 25 mm to have a thickness of 0.2 mm at ordinary temperature and is then dried at a humidity of 50% and a temperature of 23°C for 12 hours.

By a method similar to that for the aqueous adhesive composition, when an adhesive layer formed only from the first (meth)acrylic-based resin (hereinafter, referred to as "first acrylic adhesive layer") is prepared, although being not particularly limited, the storage modulus of the first acrylic adhesive layer at 23°C is preferably 1.0×10⁵ to 8.0×10⁵ Pa and more preferably 1.6×10⁵ to 7.6×10⁵ Pa. Since the storage modulus of the first acrylic adhesive layer is in the range described above, the adhesion of the adhesive layer and the effect to suppress the decrease in adhesion by brushing tend to be further improved.

By a method similar to that for the aqueous adhesive composition, when an adhesive layer formed only from the second (meth)acrylic-based resin (hereinafter, referred to as "second acrylic adhesive layer) is prepared, although being not particularly limited, the storage modulus of the second acrylic adhesive layer at 23°C is preferably 6.0×10⁵ to 8.0×10⁵ Pa and more preferably 7.0×10⁵ to 7.5×10⁵ Pa. Since the storage modulus of the second acrylic adhesive layer is in the range described above, the adhesion of the adhesive layer and the effect to suppress the decrease in adhesion by brushing tend to be further improved.

### 1.8. ADHESION

The adhesion of the adhesive layer at 23°C is preferably 0.3 to 3.0 N/50 mm, more preferably 0.5 to 2.0 N/50 mm, and further preferably 0.7 to 1.8 N/50 mm. The adhesion at 23°C in the range described above indicates that the adhesive layer has a preferable adhesion and is able to suppress the decrease in adhesion by brushing.

### 2. ADHESIVENESS IMPARTING METHOD

An adhesiveness imparting method of this embodiment includes a step of adhering the aqueous adhesive composition described above to a surface of a cloth transport member of an ink jet printing apparatus to form an adhesive layer.

The step to form an adhesive layer is a step in which the aqueous adhesive composition described above is adhered to the surface of the cloth transport member to form an adhesive layer. A method to adhere the aqueous adhesive composition to the cloth transport member is not particularly limited, and the aqueous adhesive composition may be uniformly applied over the entire surface of the cloth transport member using a blade or the like or may also be applied so as to form a predetermined pattern on a part of the surface of the cloth transport member.

In addition, in the adhesive layer forming step, the adhesive layer may be formed by drying the aqueous adhesive composition. A drying temperature is preferably 10°C to 60°C and more preferably 20°C to 40°C. In addition, a drying time is preferably 1 to 24 hours and more preferably 2 to 8 hours. Accordingly, a water resistance and a mechanical strength of an adhesive layer to be obtained tend to be further improved.

### 3. INK JET PRINTING APPARATUS

An inkjet printing apparatus of this embodiment includes a transport mechanism in which a cloth is adhered to an adhesive layer and is transported, the adhesive layer being formed of the aqueous adhesive composition described above and being provided on a surface of a cloth transport member; a recording portion to perform printing recording using an ink jet head on the cloth adhered to the adhesive layer; and a washing portion to wash the adhesive layer from which the cloth is peeled away after the printing recording is performed.

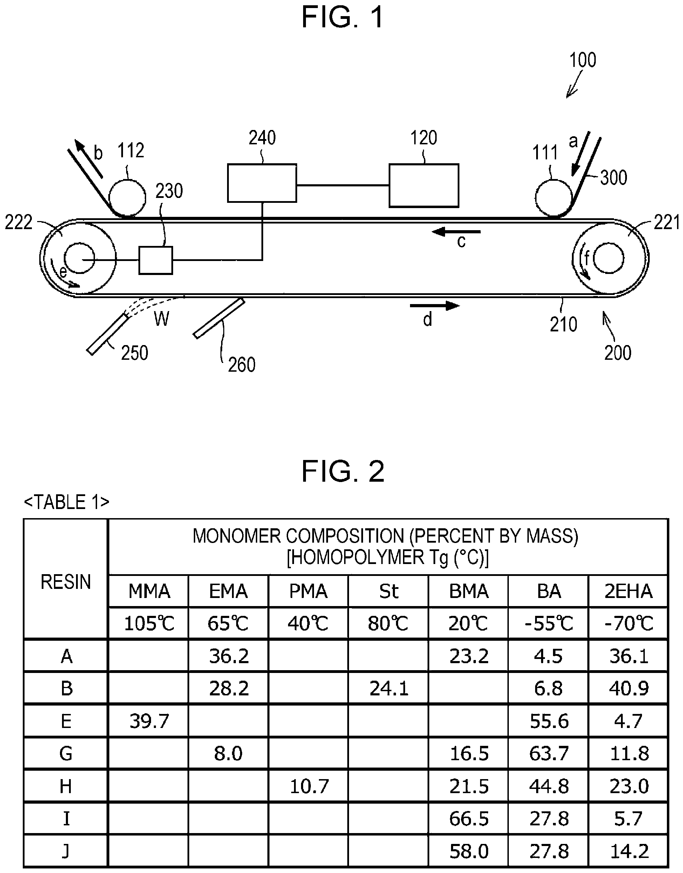

With reference to FIG. 1, an ink jet printing apparatus 100 of this embodiment will be described. FIG. 1 is an entire structural view of the ink jet printing apparatus 100 which includes a transport device 200 of this embodiment. In FIG. 1, arrows a and b each indicate a transport direction of a recording medium 300. Arrows c and d each indicate a moving direction of a cloth transport member 210. Arrows e and f indicate rotation directions of transport rollers 222 and 221, respectively.

The ink jet printing apparatus 100 may include the transport device 200 in which a recording medium is adhered to a surface of the cloth transport member 210 and is transported, recording medium transport rollers 111 and 112, and a recording portion 120. The recording medium 300 coming along the direction a is pressed to the cloth transport member 210 by the recording medium transport roller 111 and is then adhered to the surface of the cloth transport member 210.

While being adhered to the surface of the cloth transport member 210, the recording medium 300 is transported under the recording portion 120 by the transport device 200, and recording is then performed on the recording medium 300 by the recording portion 120. In addition, subsequently, at the recording medium transport roller 112, the recording medium 300 is peeled away from the cloth transport member 210.

The recording portion 120 may eject an ink composition or the like by an ink jet method. In this embodiment, although the case in which an ink jet type head is used for the recording portion 120, and printing is performed on a textile cloth used as the recording medium 300 is assumed, the configuration is not limited thereto.

The transport device 200 may include a pair of the transport rollers 221 and 222, the cloth transport member 210, a drive motor 230, a control device 240, a washing portion 250, and a removing member 260.

The transport rollers 221 and 222 are each a roller to transport the cloth transport member 210 in a predetermined direction. In addition, the cloth transport member 210 may be a belt member having a surface on which an adhesive layer is provided and is wrapped around the transport rollers 221 and 222. Since the transport rollers 221 and 222 are rotated by the drive motor 230, the cloth transport member 210 transports the recording medium in an arrow c direction. The control device 240 may control at least one of the transport device 200 and the inkjet printing apparatus 100.

The washing portion 250 washes the surface of the cloth transport member 210 from which the recording medium 300 is peeled away. By the washing portion 250, components of the recording medium 300 and printing colorants which are adhered to the cloth transport member 210 in the printing are washed out. In the washing portion 250, a pump (not shown), a sprinkler port, and a sprinkler pipe may be provided.

The removing member 260 removes water adhered to the cloth transport member 210 by the washing portion 250. The removing member 260 is not particularly limited, and for example, a blade may be mentioned. As a blade material, an elastic material is preferable. Furthermore, in view of the abrasion resistance, a polyurethane is preferable. Although a contact section in contact with the cloth transport member 210 may have a rectangular cross-section, a contact section having a diagonally truncated head may also be used.

As the cloth transport member 210, an elastic material is preferable. A heater (not shown) to warm the cloth transport member 210 may also be provided. In the step of washing the cloth transport member 210, for example, a water receiver (not shown) to receive washing water and a brush (not shown) or a sponge (not shown) to clean the cloth transport member 210 may also be used.

As the recording medium 300, for example, there may be mentioned a cloth formed from natural fibers of silk, cotton, or wool, or synthetic fibers of a nylon, a polyester, or a rayon. In addition, as the cloth, for example, a woven fabric, a knitted fabric, or a non-woven fabric may also be used.

### 4. CLOTH TRANSPORT MEMBER OF INK JET PRINTING APPARATUS

A cloth transport member of an ink jet printing apparatus of this embodiment has a surface on which an adhesive layer derived from the aqueous adhesive composition described above is provided. Although the cloth transport member is not particularly limited, for example, an elastic material is preferable, and an urethane material is particularly preferable. Since the aqueous adhesive composition described above in which an urethane-based resin and an acrylic-based resin are included in combination is used for the cloth transport member as described above, the adhesiveness between the adhesive layer and the cloth transport member is further improved, and the durability is also improved.

### 5. INK JET PRINTING METHOD

An ink jet printing method of this embodiment includes a transport step in which a cloth is adhered to an adhesive layer and is transported, the adhesive layer being formed from the aqueous adhesive composition described above and being provided on a surface of a cloth transport member of an ink jet printing apparatus; a recording step of performing printing recording using an ink jet head on the cloth adhered to the adhesive layer; and after the printing recording is performed, a washing step of washing the adhesive layer from which the cloth is peeled away.

### 5.1. TRANSPORT STEP

The transport step is a step in which a cloth is adhered to an adhesive layer and is transported, the adhesive layer being formed from the aqueous adhesive composition described above and being provided on a surface of a cloth transport member of an ink jet printing apparatus. An adhering method is not particularly limited, and as shown in FIG. 1, a method in which the cloth and the adhesive layer are pressed and adhered to each other using the transport roller may be mentioned.

### 5.2. RECORDING STEP

The recording step is a step of performing printing recording using an inkjet head on the cloth adhered to the adhesive layer. In the recording step, the cloth is transported while being in close contact with the cloth transport member with the adhesive layer provided therebetween, and in this transport process, an ink is ejected from the recording portion 120 and is adhered to the cloth. Subsequently, the cloth to which the ink is adhered may be recovered after being peeled away from the adhesive layer.

### 5.3. WASHING STEP

The washing step is a step of washing the adhesive layer from which the cloth is peeled away after the printing recording is performed. By this step, trash, such as lint, derived from the cloth and adhered to the surface of the adhesive layer in the recording step can be removed therefrom.

### EXAMPLES

Hereinafter, the present disclosure will be described in more detail with reference to Examples and Comparative Examples. The present disclosure is not limited at all to the following Examples.

### 1. SYNTHESIS OF (METH)ACRYLIC-BASED RESINS A TO J

FIG. 2 is Table 1 showing compositions of (meth)acrylic-based resins A to J.

After 114 g of ion exchange water was added to a reaction vessel equipped with a stirrer, a reflux condenser, a thermometer, a nitrogen introduction tube, and a dripping funnel, the temperature was increased to 82°C. Subsequently, total 498 g of monomers measured to have composition ratios shown in Table 1, 79 g of ion exchange water, and 34 g of Emulgen 123P (surfactant, trade name, manufactured by Kao Corporation) were added to the reaction vessel and then mixed and stirred. To the solution thus homogenized, 249 g of 2-mass% aqueous solution of ammonium persulfate used as a polymerization initiator was added at 82°C over 1.5 hours. After all the types of materials described above were added, the temperature was maintained for 1 hour and was then cooled. Subsequently, ion exchange water was added, and in addition, the solution thus obtained was adjusted to have a pH of 8 to 9 using ammonia water. Coarse and large particles were removed by filtration using a 150-mesh nylon filter, and as a result, water dispersions of the (meth)acrylic-based resins A to J shown in Table 1 were obtained. In addition, in Table 1, "MMA" represents "methyl methacrylate", "EMA" represents "ethyl methacrylate", "PMA" represents "n-propyl methacrylate", "St" represents "styrene", "BMA" represents "butyl methacrylate", "BA" represents "butyl acrylate", and "2EHA" represents "2-ethylhexyl acrylate", and furthermore, the glass transition temperature Tg (°C) of each homopolymer is shown in the column under the abbreviation of the corresponding monomer in the table. In addition, as the use amount of each homopolymer in the table, the solid content thereof is represented by percent by mass as the component amount.

### 2. MANUFACTURING OF AQUEOUS ADHESIVE COMPOSITION

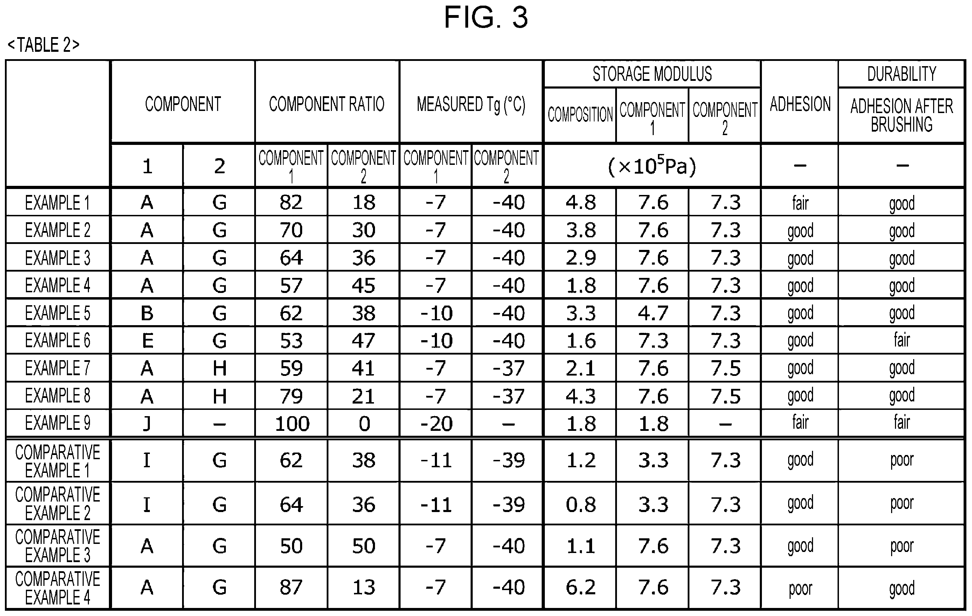

FIG. 3 is Table 2 showing compositions of the aqueous adhesive compositions.

First, the water dispersions of the (meth)acrylic-based resins A to J thus obtained were mixed in accordance with the combination between the following components 1 and 2. In addition, after the components were charged in a mixture tank so that 47.8 percent by mass (total amount on a solid content basis) of the (meth)acrylic-based resins of the components 1 and 2, 48.7 percent by mass of water, and 3.5 percent by mass of Emulgen 123P (surfactant, trade name, manufactured by Kao Corporation) were contained (100 percent by mass in total), mixing and stirring were performed, so that the aqueous adhesive composition was obtained. The type and its component ratio of the (meth)acrylic-based resin to be used, the measured glass transition temperature Tg (°C) of each resin, the storage modulus of the aqueous adhesive composition thus obtained, and the evaluation results of the adhesion and the durability are shown in Table 2. In addition, in Example 9, the (meth)acrylic-based resin J was only used, and the measurement of the glass transition temperature Tg of each component was performed in accordance with JIS K7121 using a differential scanning calorimetry (DSC).

### 3. MEASUREMENT METHOD AND EVALUATION METHOD

### 3.1. STORAGE MODULUS

The resin of the component 1, the resin of the component 2, and the obtained aqueous adhesive composition of each Example shown in the above Table 2 were applied to slide glasses having a width 25 mm to have a thickness of 0.2 mm and were then dried, so that the adhesive layers were obtained. The storage modulus of the adhesive layer at 23°C was measured using the following elastic modulus measurement apparatus. In addition, the adhesive layer was cut into a square shape of 1 cm by 1 cm, and this cut product was used as the measurement sample.
Apparatus: MCR302 (manufactured by Anton Paar)
Tool: 8 mm parallel plate
Frequency: 1.0 Hz
Distortion rate: 0.2%
Temperature increase rate: 5°C/min
Temperature range: -50°C to 80°C

### 3.2 ADHESION

In accordance with JIS Z 0237, a 180°-peeling adhesion was measured. In particular, after the aqueous adhesive composition formed as described above was applied to a slide glass having a width of 25 mm to have a thickness of 0.2 mm and then dried to form the adhesive layer, a cotton cloth was roller-compressed to the adhesive layer thus formed at a pressure of 1.0 kgf/50 mm, and the 180°-peeling adhesion thereof was measured at a temperature of 23°C.
Evaluation Criteria
Good: adhesion of 1.0 N/50 mm or more
Fair: adhesion of 0.5 to less than 1.0 N/50 mm
Poor: adhesion of less than 0.5 N/50 mm

### 3.3. DURABILITY

A durability test was performed in a manner such that after the aqueous adhesive composition described above was applied on a glass substrate and dried so as to form an adhesive layer having a thickness of 200 µm, a roller-shaped nylon brush wetted with water was pushed to the adhesive layer thus formed while being rotated. The nylon brush was made of a nylon 6/10 and had a fiber length of 50 mm and a fiber diameter of 0.5 mm. The nylon brush was planted in a stainless steel-made tube having a diameter of 200 mm. After the brush described above was pushed to the adhesive layer at 1.0 N/cm and was treated at a rotation rate of 6 rpm for 30 days, a cotton cloth having a width of 50 mm was adhered to the adhesive layer at room temperature, and a 90°-peeling force thereof was measured.
Evaluation Criteria
Good: adhesion of 0.4 N/50 mm or more
Fair: adhesion of 0.1 to less than 0.4 N/50 mm
Poor: adhesion of less than 0.1 N/50 mm

### 4. EVALUATION RESULTS

In Table 2, the composition of the aqueous adhesive composition used in each Example and the evaluation result thereof are shown. From Table 2, it was found that, in the case in which the aqueous adhesive composition to form an adhesive layer on a surface of a cloth transport member of an ink jet printing apparatus includes a (meth)acrylic-based resin and water, and the storage modulus of the adhesive layer described above at 23°C is 1.5×10⁵ to 5.0×10⁵ Pa, the adhesive layer thus obtained is excellent in adhesion and durability.

## Claims

1. An aqueous adhesive composition to form an adhesive layer on a surface of a cloth transport member of an ink jet printing apparatus, the composition comprising a (meth)acrylic-based resin and water,
the adhesive layer having a storage modulus at 23°C of 1.5×10⁵ to 5.0×10⁵ Pa.

2. The aqueous adhesive composition according to claim 1,
wherein the (meth)acrylic-based resin at least includes a first (meth)acrylic-based resin having a glass transition temperature Tg1 and a second (meth)acrylic-based resin having a glass transition temperature Tg2, and
the glass transition temperature Tg1 is higher than the glass transition temperature Tg2.

3. The aqueous adhesive composition according to claim 2,
wherein the first (meth)acrylic-based resin includes a (meth)acrylic monomer, the homopolymer of which has a glass transition temperature of 40°C or more, as one constituent unit.

4. The aqueous adhesive composition according to claim 2,
wherein a content of the first (meth)acrylic-based resin with respect to a total amount of the first (meth)acrylic-based resin and the second (meth)acrylic-based resin is 53 to 82 percent by mass.

5. The aqueous adhesive composition according to claim 1,
wherein the aqueous adhesive composition does not contain any of the group consisting of a rosin-based compound, a terpene-based compound, and a hydrocarbon resin, or in case where the aqueous adhesive composition contains at least one selected from the group consisting of a rosin-based compound, a terpene-based compound, and a hydrocarbon resin, a total content of the group consisting of the rosin-based compound, the terpene-based compound, and the hydrocarbon resin with respect to a total mass of the aqueous adhesive composition is 5 percent by mass or less.

6. The aqueous adhesive composition according to claim 1,
wherein the adhesive layer has an adhesion at 23°C of 0.5 to 2.0 N/50 mm.

7. The aqueous adhesive composition according to claim 1,
wherein the aqueous adhesive composition does not contain an organic solvent, or in case where the aqueous adhesive composition contains an organic solvent, a content of the organic solvent with respect to a total mass of the aqueous adhesive composition is 5.0 percent by mass or less.

8. The aqueous adhesive composition according to claim 1,
wherein the aqueous adhesive composition does not contain a colorant, or in case where the aqueous adhesive composition contains a colorant, a content of the colorant with respect to a total mass of the aqueous adhesive composition is 1.0 percent by mass or less.

9. A method for imparting adhesiveness, comprising:
adhering the aqueous adhesive composition according to claim 1 to a surface of a cloth transport member of an ink jet printing apparatus to form an adhesive layer.

10. An ink jet printing apparatus comprising:
a transport mechanism in which a cloth is adhered to an adhesive layer and is transported, the adhesive layer being formed of the aqueous adhesive composition according to claim 1 and being provided on a surface of a cloth transport member;
a recording portion to perform printing recording using an inkjet head on the cloth adhered to the adhesive layer; and
a washing portion to wash the adhesive layer from which the cloth is peeled away after the printing recording is performed.

11. A cloth transport member of an ink jet printing apparatus, having a surface on which an adhesive layer derived from the aqueous adhesive composition according claim 1 is provided.

12. An inkjet printing method comprising:
a transport step in which a cloth is adhered to an adhesive layer and is transported, the adhesive layer being formed from the aqueous adhesive composition according to claim 1 and being provided on a surface of a cloth transport member of an ink jet printing apparatus;
a recording step of performing printing recording using an ink jet head on the cloth adhered to the adhesive layer; and
after the printing recording is performed, a washing step of washing the adhesive layer from which the cloth is peeled away.
